# EUROPEAN PATENT APPLICATION

(11) **EP 3 564 902 A1**
(43) Date of publication of application: **06.11.2019**
(21) Application number: 18305556.5
(22) Date of filing: 03.05.2018
(51) Int. Cl.: G06T 7/11, H04N 19/597, H04N 13/161

(54) **METHOD AND APPARATUS FOR GENERATING LAYERED DEPTH IMAGES FOR LIGHT-FIELDS**

(71) Applicant: InterDigital CE Patent Holdings, 75017 Paris (FR)
(72) Inventor: SABATER, Neus, 35576 CESSON-SÉVIGNÉ (FR); HOG, Matthieu, 35576 CESSON-SÉVIGNÉ (FR); DOYEN, Didier, 35576 CESSON-SÉVIGNÉ (FR)
(74) Representative: Huchet, Anne

(57) **Abstract**

A method and an apparatus for generating at least one layered depth image from a set of views representative of a Light-Field capture of a scene are disclosed. Generating the layered depth image comprises segmenting the set of views into groups of pixels, each group of pixels corresponding to light rays imaging a same area in the scene, and generating the layered depth image using the groups of pixels, wherein a first layer of the layered depth image comprises groups of pixels comprised in a reference view from the set of views, and wherein other layers of the layered detph image comprise only groups of pixels that are not comprised in the reference view, and wherein a new layer of the layered depth image is set for a group of pixels from a current reference view if a current layer already comprises a texture at a same position as in the current reference view.

## Description

### 1. Technical field

The present disclosure relates to Light Fields representation and more particularly to a method and an apparatus for generating layered depth images or videos for Light-Fields.

### 2. Background art

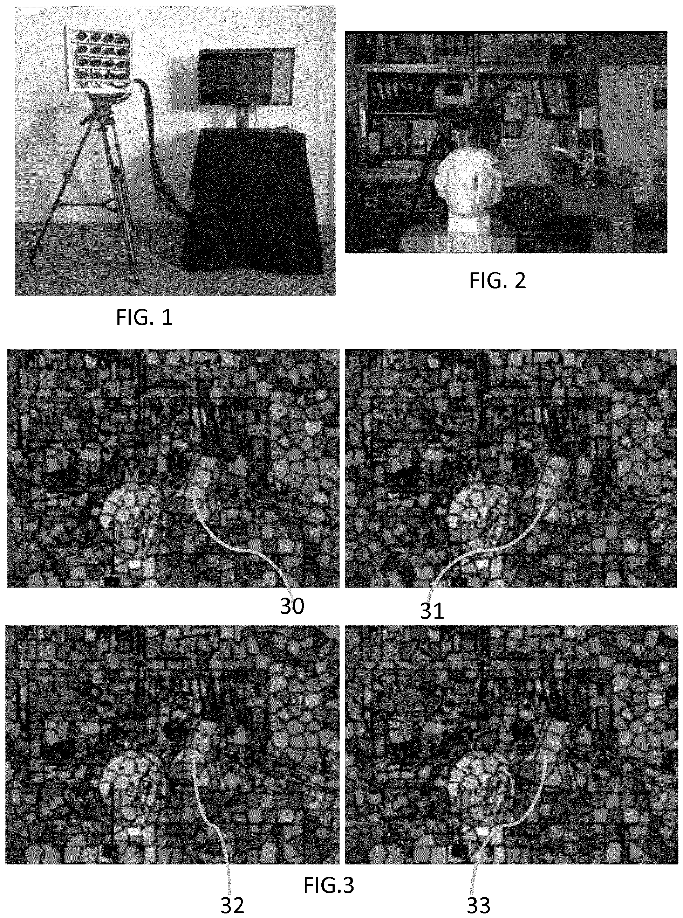

Generally, Light-Fields are captured with plenoptic Cameras or Camera Rigs. One example of a camera rig is illustrated in fig. 1. In both cases, the Light-Field can be seen as a collection of calibrated images or videos, also known as structured multi-view. The Light-Field not only provides the pixel information of a scene but also the angular information.
So, the amount of data captured by such systems is huge, and become even more important when capturing dynamic Light-Fields, i.e. when capturing Light-Fields over time.
Storing such an amount of data can rapidly become problematic, as well as the memory access and processing of such stored data.
A solution for storing multi-view data in a compact format called LDI (Layered Depth Image) or LDV (Layered Depth Video) has been proposed in "Layered Depth Images". Shade, J., Gortler, S., He, L. W., & Szeliski, R. Layered depth images. In Proc. of the conference on Computer graphics and interactive techniques (pp. 231-242). ACM. 1998. A classical construction scheme consists in warping the different images of the Multiview towards a reference image and then merging the content. Thus, according to this method, a dense depth estimation is needed for each view to be warped. However, depth estimation is a complex task that cannot be performed in real time for all the views of a Light-Field, which renders this method not suitable for Light-Fields.

Therefore, there is a need for a new method for representing Light-Fields data, so that Light-Fields data can be stored and processed easily and in real-time.

### 3. Summary

According to an aspect of the present disclosure, a method for generating at least one layered depth image from a set of views representative of a Light-Field capture of a scene is disclosed. Such a method comprises segmenting the set of views into groups of pixels, each group of pixels corresponding to light rays imaging a same area in the scene, and generating the layered depth image using the groups of pixels, wherein a first layer of the layered depth image comprises groups of pixels comprised in a reference view from the set of views, and wherein other layers of the layered detph image comprise only groups of pixels that are not comprised in the reference view, and wherein a new layer of the layered depth image is created for a group of pixels from a current reference view if a current layer already comprises a color or texture at a same position as in the current reference view.

According to another aspect of the present disclosure, an apparatus for generating a layered depth image from a set of views representative of a Light-Field capture of a scene is disclosed. Such an apparatus comprises means for segmenting the set of views into groups of pixels, each group of pixel corresponding to light rays imaging a same area in the scene, and means for generating the layered depth image using the groups of pixels, wherein a first layer of the layered depth image comprises groups of pixels comprised in a reference view from the set of views, and wherein other layers of the layered detph image comprise only groups of pixels that are not comprised in the reference view, and wherein a new layer of the layered depth image is created for a group of pixels from a current reference view if a current layer already comprises a color or texture at a same position as in the current reference view.

### 4. Brief description of the drawings

Figure 1 illustrates an exemplary camera rig comprising 4x4 cameras for light-fields capture.
Figure 2 illustrates an exemplary image of a scene captured by a camera for light-fields.
Figure 3 illustrates exemplaries images representative of SuperRays computed from a set of 4 views of a Light Field.
Figure 4 illustrates an exemplary method for generating a layered depth image for Light-Field data according to an embodiment of the present disclosure.
Figure 5 illustrates an exemplary toy scene captured by three cameras.
Figures 6A-C illustrate exemplaries views of the scene represented in Figure 5.
Figures 7A-F illustrates the different steps of the method for generating a layered depth image for Light-Field data according to an embodiment of the present disclosure.
Figure 8A illustrates an example of a layered depth image resulting from the method for generating a layered depth image for Light-Field data according to an embodiment of the present disclosure.
Figure 8B illustrates an example of a corresponding data stream.
Figure 9 illustrates an exemplary method for generating layered depth images for dynamic Light-Field data according to an embodiment of the present disclosure.
Figure 10 illustrates an exemplary scene captured by three cameras at time T=0 and time T= 1.
Figure 11 illustrate exemplaries views of the scene at time T=1.
Figure 12A illustrates an example of a layered depth image at time t=1, resulting from the method for generating layered depth image for dynamic Light-Field data according to an embodiment of the present disclosure.
Figure 12B illustrates an example of a corresponding data stream.
Figure 13 illustrates an exemplary method for generating layered depth images for dynamic Light-Field data according to another embodiment of the present disclosure.
Figure 14 illustrates keyframes position over time for generating layered depth images for dynamic Light-Field data according to the embodiment of the present disclosure illustrated on figure 13.
Figure 15 illustrates an exemplary apparatus for generating at least one layered depth image for Light-Field data according to an embodiment of the present disclosure.

### 5. Description of embodiments

The present disclosure allows representing Light-Fields data so that data can be processed and stored in real-time. For this, according to the principle disclosed herein, only non-redundant information is taken into account and stored. The principle disclosed herein allows to store Light-Fields data without degrading image quality, compared for instance with compression methods.

According to an embodiment of the present disclosure, a method for generating a layered detph image for Light-Fields is disclosed.

A captured Light-Field is considered as a multi-view content, comprising a set of still N views in the case of still image representation or a set of dynamic N views in the case of video. In the case of still views, it is to be understood that each view is represented as a still image, commonly represented in computer graphics as an array of pixel intensities.

In the case of dynamic views, it is to be understood here that the views vary over time, in other words, a view is a video sequence represented as successive images, each image being commonly represented as an array of pixel intensities.

Given a captured Light-Field, instead of estimating the depth of each of the views, it is considered here to segment the views of the Light-Field.

Such a segmentation could for instance be performed using Super-Rays of the Light-Field. The SuperRays are an extension of Super-Pixels for Light-Fields. Super-Pixels for Light-Fields are for instance disclosed in *"*4D Light Field Superpixel and Segmentation", H. Zhu, Q. Wang, Computer Vision and Pattern Recognition (CVPR), 2017 IEEE.

A super-ray is a grouping of light rays within and accross the set of views. Super-rays group perceptually similar and corresponding pixels accross several views. In the present disclosure, SuperRays are a set of pixels in the different views that correspond to light rays imaging the same zone of the scene with similar color.

The advantage of the segmentation is that SuperRays only need to estimate the depth in a very sparse number of pixels in the Light Field, so SuperRays are fast to compute. Also, SuperRays allow to easily establish corresponding regions between images of the different views, which allows to remove the redundant information from the MultiViews.

Figure 3 illustrates exemplaries images representative of SuperRays computed from a set of 4 views of a Light-Field image illustrated on Figure 2.

On Figure 3, each SuperRay has been colored with a different grey level for visualization. It can be seen thata SuperRay is a collection of Super-Pixels imaging the same zone of the scene the different views of the light-field. For instance, areas denoted by 30, 31, 32, 33 correspond to a same SuperRay.

The present principle is described in the following in the case of SuperRays, but any segmentation adapted to Light Fields could be used.

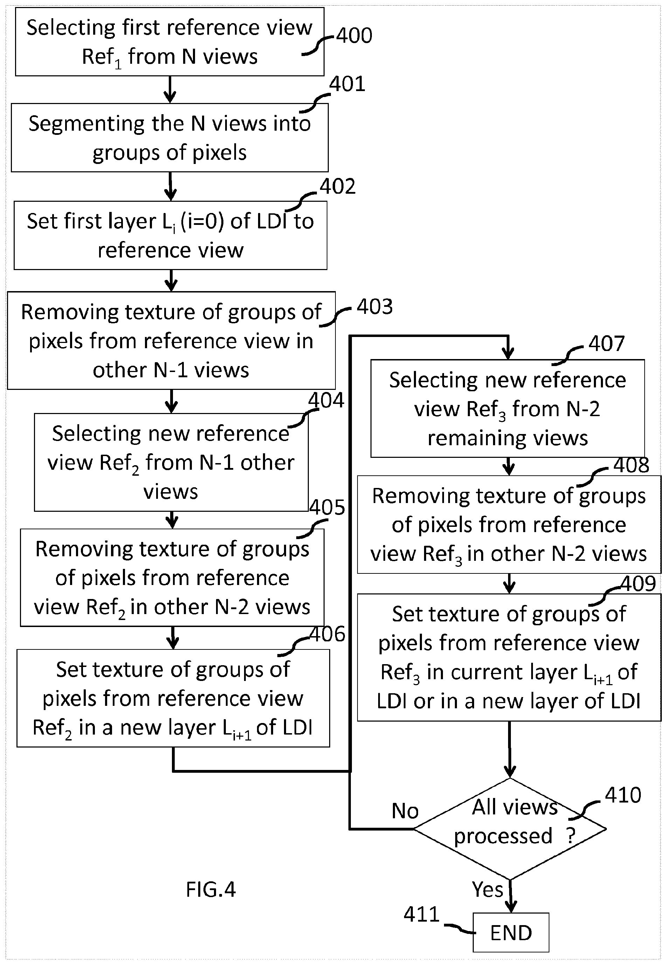

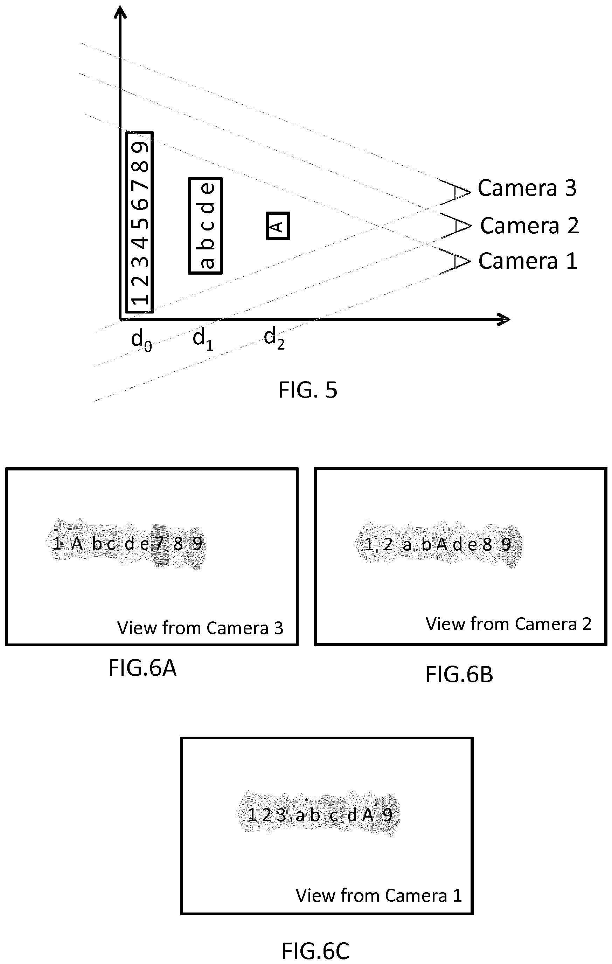

Figure 4 illustrates an exemplary method for generating a layered depth image (LDI) for Light-Field data according to an embodiment of the present disclosure. The method will be described below with the aid of Figures 5, 6A-C and 7A-F. Figure 5 illustrates an exemplary scene captured by three cameras. The exemplary scene comprises three objects located at different depths d₀, d₁, d₂, from the cameras. Those three objects are represented as planar rectangles or squares. The numbers and letters represent the color or texture on each of the objects.

Figures 6A-C illustrate exemplaries views of each of the cameras. It can be seen from figures 6A-C that due to the different parallax of the cameras, different parts of the scene are occluded or disoccluded, i.e. not visible, in each of the views. The different grey levels represent different SuperRays.

At step 400, a first Reference image Ref₁ in the set of N views constituting the light-field is selected. For instance, at the beginning of the process, a central view is selected. In the example described here, the first reference image is selected as the image acquired by camera 2.

At step 401, the set of N views is segmented into groups of pixels. For instance, SuperRays are computed as explained above. Each SuperRay has a label *l* and a depth value *dₗ*. Figure 6A-C illustrates the result of the segmentation on each image view. The different grey levels represent different SuperRays. A same grey level accross different views represents a same SuperRay.

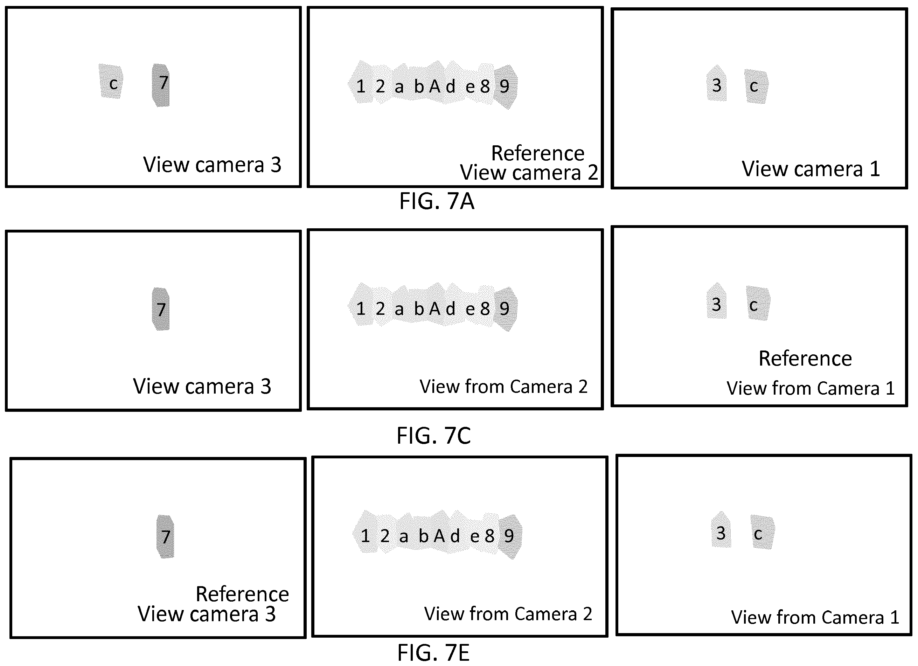

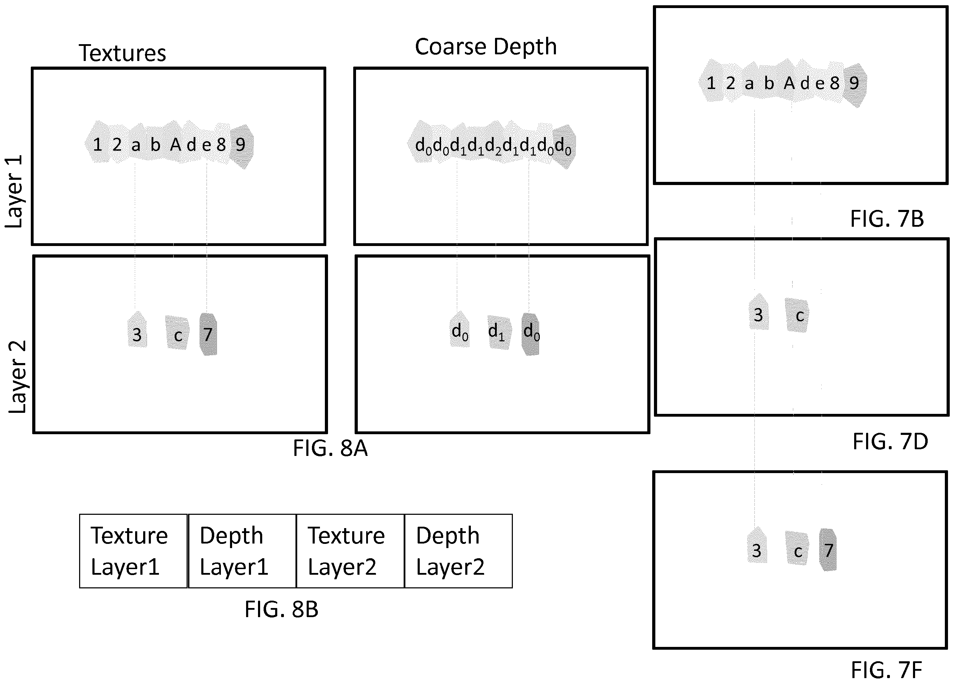

At step 402, the first layer of the LDI corresponds to the first Reference image and the depth for this first layer is set equal to the corresponding depths *dₗ*. as illustrated in figure 7B, each SuperRay *l* of the first layer 1 is associated to its corresponding depth *dₗ* in the layered depth image. Such a first layer of the LDI is illustrated on figure 8A (layer 1).

At step 403, for each SuperRay *l* in the first Reference view, the value or texture, e.g. color, intensity, of the pixels corresponding to this SuperRay *l* is removed from each of the *N -* 1 other views of the light-field. Such texture which is present in the reference view and in the other view corresponds to redundant information. Figure 7A illustrates the result on each image view of this removal step. It can be seen that for the image view of camera 3 and for the image view of camera 1, only the texture non present in the image of the reference view remains.

At step 404, a second Reference image Ref₂ is selected in the set of *N -* 1 other views in which the texture of the pixels corresponding to SuperRays *l* in the first reference view are removed. For instance, the view from camera 1 is selected as the second reference view.

At step 405, for each SuperRay *l*' in the second Reference view Ref₂, the texture of the pixels corresponding to this SuperRay *l*' is removed in the *N -* 2 remaining views. Figure 7C illustrates the result on each image view of such a removal step. It can be seen that for the image view of camera 3, only the texture non-present in the image of the second reference viewremains. SuperRays *l*' in the second reference view Ref₂ are SuperRays that are not in the first reference view since the texture of the SuperRays *l* of the first reference view was removed from the set of *N -* 1 other views from which the second reference view is selected.

At step 406, the remaining texture of the SuperRays *l*' of the second reference view Ref₂ is stored in a second layer (layer 2) of the LDI. Each SuperRay *l*' of the second reference view Ref₂ is stored in the second layer (layer 2) together with its depth *d_{l'}.* The textures of the remaining SuperRays *l*' in the second reference view Ref₂ are textures of SuperRays *l'* occluded in the first reference view and that are, consequently, not stored in the first layer of the LDI. The texture and the depth of the SuperRays *l'* are added to the second layer (layer 2) of the LDI since the first layer (layer 1) of the LDI already has a texture stored at a same position, as illustrated in Figure 7D.

At step 407, if N>=3, a third Reference image Ref₃ is selected in the set of *N -* 2 remaining views in which the texture of the pixels corresponding to SuperRays *l'* in the second reference view are removed. For instance, the view from camera 3 is selected as the new reference view.

At step 408, for each SuperRay *l"* in the third Reference view Ref₃, the texture of the pixels corresponding to this SuperRay *l"* is removed in the other *N -* 2remaining views. Only the texture non-present in the image of the third reference view remains. SuperRays *l"* in the third reference view Ref₃ are SuperRays that are not in the second reference view since the texture of the SuperRays *l*' of the secondreference view was removed from the set of *N -* 2remaining views from which the third reference view is selected.

At step 409, the remaining texture of the SuperRays *l"* of the third reference view Ref₃ is stored in the second layer (layer 2) of the LDI except if the second layer already has a texture stored at a same position.

In the example of the scene illustrated in Figure 5, at step 409, the remaining texture of the image of the reference view (camera 3) is added to the current layer (Layer 2). Here, it is not necessary to set a new layer as the current layer (layer 2) has not yet a texture at the position of the textures from the reference view. The resulting layer (Layer 2) is illustrated on Figure 7F.

In the case that the second layer already has a texture stored at a same position, a third layer (layer 3) is created in the LDI and the texture of the SuperRays *l"* is stored in the third layer (layer 3).

At step 410, it is checked whether all the views of the light-field have been processed. If not, the process goes from steps 407 to 409 again, otherwise the process goes to step 411 and ends.

Figure 8A illustrates the resulting layers of the LDI (Layer 1 and Layer 2) and the corresponding layered depth map. After the method disclosed above has been performed, instead of having the Light-Field stored in a Multi-View, the Light-Field is stored in two images: the first layer and the second layer of the LDI, the second layer (Layer 2) having many regions equal to 0. The available depth values are not stored in a depth map per view (as in the MVD format - Multi-View +Depth) but consist in small number of depth values stored in the layers of the LDI. In other words, each SuperRay is stored in alayer of the LDI with its associated depth. It is to be noted that the depth is estimated during the SuperRay estimation, at step 401.

On Figure 8A, the first layer (Layer 1) stores a texture for each of the pixels and a () depth. The second layer (Layer 2) stores many pixels with empty textures and depths.

The layered depth image LDI illustrated on Figure 8A can be encoded in a data stream such as illustrated in Figure 8B. Such a data stream comprises data corresponding to the textures of the first layer (Layer 1), data corresponding to the depths stored in Layer 1, followed by the textures and depth of the second layer (Layer 2).

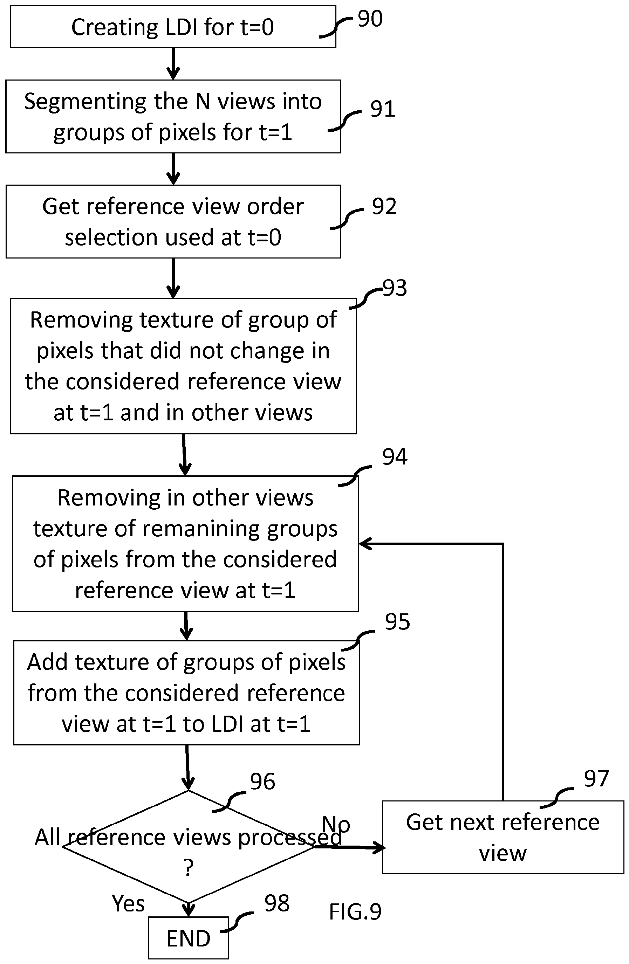

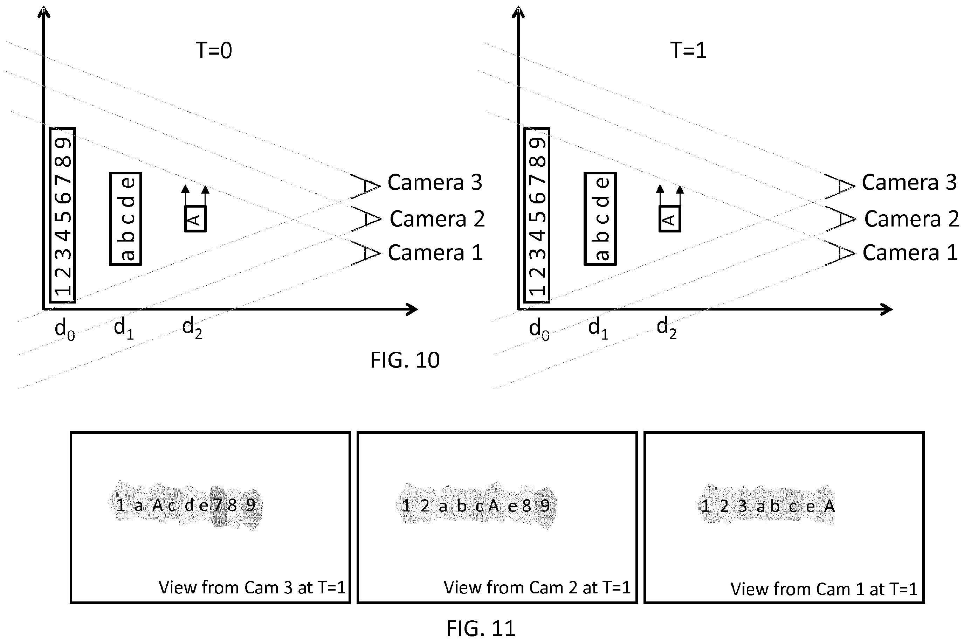

The method described above corresponds to a still Light-Field captured at a given instant T. However, this method may beextended to dynamic (video) Light-Field. Figure 9 illustrates an exemplary method for generating layered depth images for dynamic Light-Field data according to an embodiment of the present disclosure, which will be described below with the aid of figures 10 and 11. Figure 10 illustrates the exemplary scene of Figure 5 captured by the three cameras at time T=0 and time T= 1. At T=1, the foreground object with texture "A" has moved in one direction and keeps the same depth *d*₂. Figure 11 illustrates exemplaries views of the scene at time T=1.

At step 90, a Layered Depth Image is generated for a light-field acquired at T=0 using the method described above with reference to Figure 4.

According to an embodiment of the present disclosure, the ordered set of reference images at T=0 will be the same at T=1.

At step 91, the segmentation of the light-field acquired at T=1 is computed based on the segmentation obtained for the light-field acquired at T=0. For instance, the light-field segmentation in SuperRays using the method disclosed in *"*Dynamic Super-Rays for efficient Light Field Video Processing", M. Hog, N. Sabater and C. Guillemot, 2017*.* can be used. Results of such a segmentation in the case of the scene of Figure 10 is illustrated on Figure 11.

Based on the obtained segmentation, there are:
- new SuperRays that were not present at time T=0, and/or
- SuperRays that are no longer present in the light-field acquired at time T=1, i.e. SuperRays hat have been removed at T=1 with regards to T=0, and/or
- SuperRays, that were present in the light-field acquired at time T=0 and T=1 at the same position,
- other SuperRays, that were present in the light-field acquired at time T=0 and T=1 and have moved. SuperRays *l* that moved between T=0 and T= 1 have an optical flow (*uₗ,vₗ*) estimation, also known as motion information. In the example illustrated on Figures 10 and 11, the SuperRay for texture A moved.

At step 92, the reference view order that has been used (step 90) for the scene captured at T=0 is obtained. In the example given here, the first Reference image for the light-field acquired at T=1 is thus the image from the camera view 2.

At step 93, for all the SuperRays of a considered reference view that did not change between T=0 and T=1, i.e. the SuperRays that have kept the same position in an image between T=0 and T=1, are removed in the considered reference view and in the other N-1 views. These SuperRays are redundant information as their texture is already in the Layered Detph Image generated at step 90.

At step 94, for each remaining SuperRay *l*' in the considred reference view at T=1, the texture of the corresponding pixels in the other *N -* 1 remaining views is removed. Here, we consider the SuperRays *l*' in the considered reference view at T=1 for which the texture has not been removed in a previous step.

In step 95, a first layer (Layer 1) is generated and corresponds to the considered Reference image view for T=1. The Depth and Optical Flow stored in this first layer correspond to depths *dₗ* and movements (*uₗ,vₗ*) of the SuperRays *l* of the considered reference view. Note that, here, only the texture in the considered reference image view that has not been removed at step 93 is added to the first layer of the LDI for T=1.

At step 96, it is checked whether all the views have been processed. If not, the process goes to step 97 where the next reference view is selected according to the order of reference view selection used at step 90 and the process iterates at step 94 with the next reference view. Otherwise the process goes to step 98 and ends.

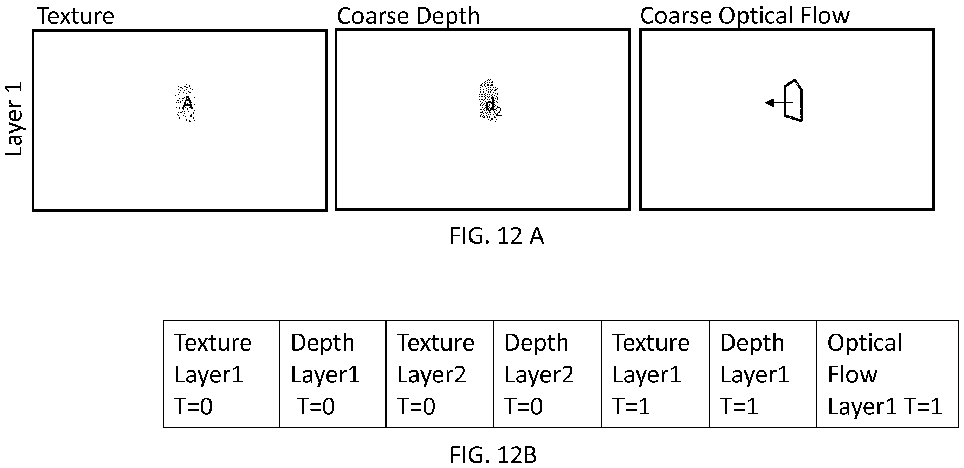

Figure 12A illustrates an example of the resulting Layer 1 of the layered depth image for time T=1. In the example illustrated here, at time T=1, the LDI has only one layer (Layer 1) with many zeros as only the moving texture from T=0 is stored. The associated depth and motion information is also stored at this layer (layer 1).

The layered depth image illustrated on figure 12A can be encoded in a data stream such as illustrated in figure 12B. Such a data stream comprises data corresponding to the textures and depths of Layer 1 for T=0, data corresponding to the the textures and depths of Layer 2 for T=0, and the textures and depths of Layer1 for T=1.

Now, the method disclosed above with Figure 9 may successively be applied for T=2, T=3,... However, if the Light-Field sequence is long or if there is too much scene movement, the SuperRays between T=0 and the final frames of the sequence may be very different, and the Layers of the LDI may not be compact anymore.

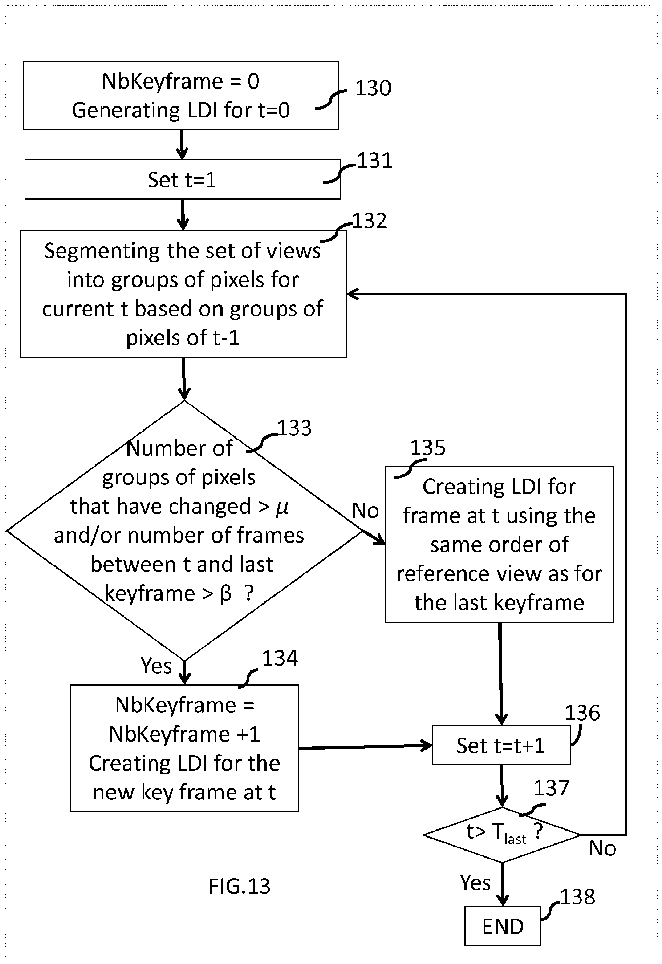

Figure 13 illustrates an exemplary method for generating layered depth images for dynamic Light-Field data according to another embodiment of the present disclosure.

According to this embodiment, keyframes in the video sequence are used. Such keyframes correspond to the frame in the video sequence at which the mehod for generating the LDI is used as described with Figure 4. For the frames between two keyframes, the process described with Figure 9 is applied, and the order of the reference views selection used for these frames is the order used for the last keyframe. In other words, at each keyframe, the order of the reference views selection may be reset.

At step 130, a first keyframe is selected. For instance, the integer variable "NbKeyframe" is set to 0.

The Layered Depth Image is generated at time T=0 using the method described with Figure 4.

At step 131, the next frame at T=1 is considered and a LDI is generated using the method in Figure 9. At step 132, the SuperRays for the current frame at time T>=2 are computed based on the SuperRays at time T-1.

Then, at step 133, if the number of SuperRays that have changed (appear, disappear, move) at timeT with regards to time T-1 is higher than a given threshold µ and/or if the number of frames between time T and the last keyframe is bigger than a given threshold β, then the light field at time T is selected as a keyframe. In that case, the integer variable "NbKeyframe" should be increased by one. If at step 133, a new Keyframe is selected, then at step 134, a layered depth image for the frame at time T is computed using the method described with Figure 4.

Otherwise, at step 135, a layered depth image is generated for the frame at time T using the same order of reference view selection as for the last keyframe. At step 135, the layered depth image is generated at time T using the method described with Figure 9 (steps 92-98).

Then, at step 136, the process goes to the next frame at time T+1.

At step 137, it is checked whether all the frames at a given time T of the video sequence have been processed, that is if T>Tₗₐₛₜ, where Tₗₐₛₜ corresponds to the last frame of the video sequence. If this is not the case, the process loops to step 132, otherwise the process ends at step 138.

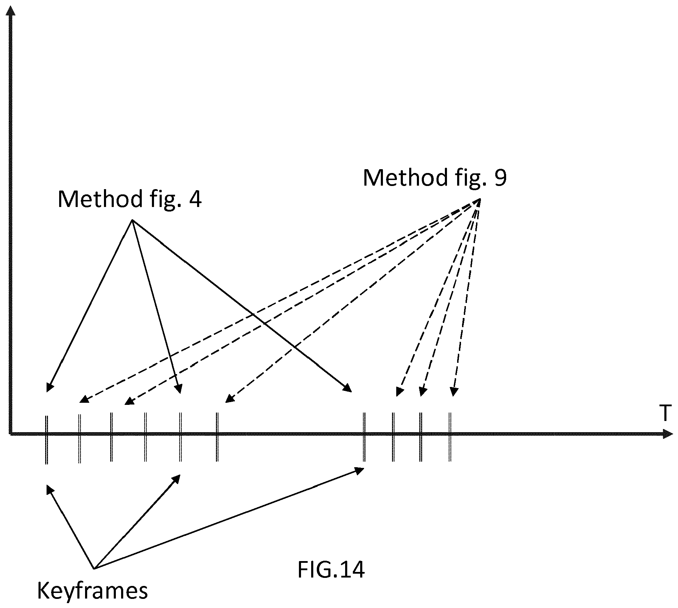

Figure 14 illustrates keyframes position over time for generating layered depth images for dynamic Light-Field data according to the embodiment described above.

According to the methods disclosed above, a compact representation for Light-Fields is provided, allowing easy and real-time processing of Light-Fields data, without any degradation on the texture information of the Light-Fields.

According to a variant, a depth estimation (and eventually an Optical Flow estimation) can be added for each pixel which has a texture in the LDI. This estimation takes advantage of the estimation that is already available for each SuperRay. The advantage of this variant compared to estimating a full MVD is that the precise depth (or movement) is not estimated for all pixels in all the views but only for pixels having a texture in the LDI or LDV.

Figure 5 illustrates an exemplary apparatus for generating at least one layered depth image for Light-Field data according to an embodiment of the present disclosure.

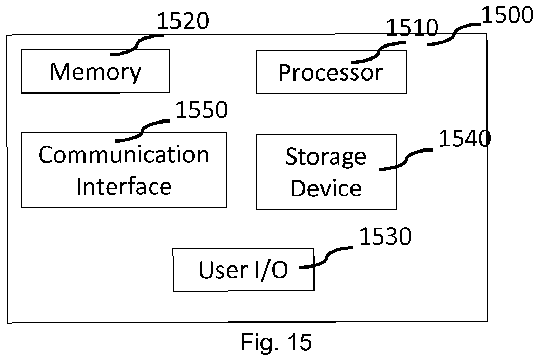

Figure 15 illustrates a block diagram of an exemplary system 1500 in which various aspects of the exemplary embodiments may be implemented. The system 1500 may be embodied as a device including the various components described below and is configured to perform the processes described above. Examples of such devices, include, but are not limited to, mobile devices, personal computers, laptop computers, smartphones, tablet computers, digital multimedia set top boxes, digital television receivers, personal video recording systems, connected home appliances, and servers. The system 1500 may be communicatively coupled to other similar systems, and to a display via a communication channel.

Various embodiments of the system 1500 include at least one processor 1510 configured to execute instructions loaded therein for implementing the various processes as discussed above. The processor 1510 may include embedded memory, input output interface, and various other circuitries as known in the art. The system 1500 may also include at least one memory 1520 (e.g., a volatile memory device, a non-volatile memory device). The system 1500 may additionally include a storage device 1540, which may include non-volatile memory, including, but not limited to, EEPROM, ROM, PROM, RAM, DRAM, SRAM, flash, magnetic disk drive, and/or optical disk drive. The storage device 1540 may comprise an internal storage device, an attached storage device, and/or a network accessible storage device, as non-limiting examples.

Program code to be loaded onto one or more processors 1510 to perform the various processes described hereinabove may be stored in the storage device 1540 and subsequently loaded onto the memory 1520 for execution by the processors 10. In accordance with the exemplary embodiments, one or more of the processor(s) 1510, the memory 1520, and the storage device 1540, may store one or more of the various items during the performance of the processes discussed herein above, including, but not limited to images, videos, textures, depths, optical flow datas, variables, operations, and operational logic.

The system 1500 may also include a communication interface 1550 that enables communication with other devices via a communication channel. The communication interface 1550 may include, but is not limited to a transceiver configured to transmit and receive data from the communication channel. The communication interface 1550 may include, but is not limited to, a modem or network card and the communication channel 1550 may be implemented within a wired and/or wireless medium. The various components of the system 1500 may be connected or communicatively coupled together (not shown) using various suitable connections, including, but not limited to internal buses, wires, and printed circuit boards.

The system 1500 also includes user interactions means 1530 coupled to the processor for receiving user inputs.

The exemplary embodiments may be carried out by computer software implemented by the processor 1510 or by hardware, or by a combination of hardware and software. As a non-limiting example, the exemplary embodiments may be implemented by one or more integrated circuits. The memory 1520 may be of any type appropriate to the technical environment and may be implemented using any appropriate data storage technology, such as optical memory devices, magnetic memory devices, semiconductor-based memory devices, fixed memory, and removable memory, as non-limiting examples. The processor 1510 may be of any type appropriate to the technical environment, and may encompass one or more of microprocessors, general purpose computers, special purpose computers, and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), tablets, and other devices that facilitate communication of information between end-users.

A method for generating at least one layered depth image from a set of views representative of a Light-Field capture of a scene is disclosed. Such a method comprises:
- segmenting the set of views into groups of pixels, each group of pixels corresponding to light rays imaging a same area in the scene,
- generating the layered depth image using the groups of pixels, wherein a first layer of the layered depth image comprises groups of pixels comprised in a reference view from the set of views, and wherein other layers of the layered detph image comprise only groups of pixels that are not comprised in the reference view, and wherein a new layer of the layered depth image is set for a group of pixels from a current reference view if a current layer already comprises a texture at a same position as in the current reference view.

An apparatus for generating a layered depth image from a set of views representative of a Light-Field capture of a scene is also disclosed. Such an apparatus comprises:
- means for segmenting the set of views into groups of pixels, each group of pixels corresponding to light rays imaging a same area in the scene,
- means for generating the layered depth image using the groups of pixels, wherein a first layer of the layered depth image comprises groups of pixels comprised in a reference view from the set of views, and wherein other layers of the layered detph image comprise only groups of pixels that are not comprised in the reference view, and wherein a new layer of the layered depth image is set for a group of pixels from a current reference view if a current layer already comprises a texture at a same position as in the current reference view.

According to an embodiment of the present disclosure, generating the layered depth image using the groups of pixels comprises:
- selecting the reference view from the set of views,
- for each group of pixels in the selected reference view, removing in the other views of the set of views, texture of the pixels belonging to the group of pixels,
- repeating selecting a reference view from the set of views and removing in the other views of the set of views, texture of the pixels belonging to each group of pixels comprised in the selected reference view, until all views have been processed.

According to the principle disclosed herein, a layered depth image for representing Light-Fields can be generated fast and in real-time. The resulting format is more compact than MVD (Multi-View+Depth format) since the redundant information from the Light-Field capture is removed. Furthermore, the resulting information is sufficient to render a Dynamic window/Immersive window.

The remaining texture in the obtained Layered Detph Image has the same quality as the captured texture. Therefore, no degradation of the quality of the Light-Field happens.

According to another embodiment of the present disclosure, for each group of pixels, a depth value is obtained from the segmentation of the set of views.

According to another embodiment of the present disclosure, the depth of each group of pixels is stored in the layered depth image.

According to another embodiment of the present disclosure, the layered depth image is generated for a set of views representative of the scene at a first time instant, the method or the apparatus further comprises generating other layered depth images for the set of views over time.

According to another embodiment of the present disclosure, generating other layered depth images for the set of views over time comprises, for each current time instant:
- segmenting the set of views based on the groups of pixels obtained for the set of views at a time instant preceding the current time instant,
- generating a layered depth image for the current time instant using a same reference view order selection from the set of views as the one used for generating the layered depth image for the first time instant.

According to another embodiment of the present disclosure, movements of at least one group of pixels in the set of views between the current time instant and the preceding time instant is stored in the layered depth image generated for the current time instant.

According to another embodiment of the present disclosure, the same reference view order selection from the set of views is used for generating other layered depth images over time as long as a number of frames between the current time instant and the first time instant is below a value or a number of groups of pixels obtained from segmenting the set of views that have changed between the current time instant and the time instant preceding the current time instant is below another value.

According to another embodiment of the present disclosure, the reference view order selection from the set of views used for generating other layered depth images over time is reset at each keyframe time instant, and wherein at a keyframe time instant, generating the layered depth image is performed as for generating the layered depth image at the first time instant.

According to another embodiment of the present disclosure, another layered depth image generated for a current time instant comprise only groups of pixels that are not comprised in another layered depth image generated for a preceding time instant and groups of pixels that have moved between the preceding time instant and the current time instant.

According to another embodiment of the present disclosure, texture of layers other than the first layer of the layered depth image, is rearranged in at least one picture.

One or more of the present embodiments also provide a computer readable storage medium having stored thereon instructions for generating at least one layered depth image representative of a set of views representative of a Light-Field capture of a scene, according to any one of the embodiments of the method described above. The present embodiments also provide a computer program product including instructions for performing any one of the embodiments of the method described.

A data stream representative of at least one layered depth image representative of a set of views representative of a Light-Field capture of a scene is also disclosed. Said data stream comprising:
- a first layer comprising pixels data of groups of pixels comprised in a reference view from the set of views,
- and at least one other layer comprising pixels data of groups of pixels that are not comprised in the reference view, and wherein said at least one other layer comprises pixels data at a position only if a preceding layer of the layered depth image already comprises pixels data at the same position.

According to an embodiment of the present disclosure, said data stream comprises depth data associated to pixels data and/or movement information associated to pixels data.

## Claims

1. A method for generating at least one layered depth image from a set of views representative of a Light-Field capture of a scene, comprising:
- segmenting the set of views into groups of pixels, each group of pixels corresponding to light rays imaging a same area of the scene,
- selecting a first reference view from the set of views,
- generating a first layer of the layered depth image comprising textures of groups of pixels of the first reference view,
- removing in the other views of the set of views, the texture corresponding to the group of pixels of the first reference view,
- selecting a second reference view from the set of views from which texture of groups of pixels of the first reference view were removed,
- generating a second layer of the layered depth image comprising textures of groups of pixels of the second reference view that have not been removed.

2. An apparatus for generating a layered depth image from a set of views representative of a Light-Field capture of a scene, comprising at least one processor configured to:
- segment the set of views into groups of pixels, each group of pixels corresponding to light rays imaging a same area of the scene,
- select a first reference view from the set of views,
- generate a first layer of the layered depth image comprising textures of groups of pixels of the first reference view,
- remove in the other views of the set of views, the texture corresponding to the group of pixels of the first reference view,
- select a second reference view from the set of views from which groups of pixels of the first reference view were removed,
- generate a second layer of the layered depth image comprising textures of groups of pixels of the second reference view that have not been removed.

3. A method or an apparatus according to claim 1 or 2, wherein the depth of each group of pixels is stored in the layered depth image.

4. A method according to claim 1, or an apparatus according to claim 2, wherein the layered depth image is generated for a set of views representative of the scene at a first time instant, the method or the apparatus further comprises generating other layered depth images for the set of views over time.

5. A method or an apparatus according to claim 4, wherein generating other layered depth images for the set of views over time comprises, for a given time instant:
- segmenting the set of views based on the groups of pixels obtained for the set of views at a time instant preceding the given time instant,
- generating a layered depth image for the given time instant using a same reference view order selection from the set of views as the one used for generating the layered depth image for the first time instant.

6. A method or an apparatus according to claim 4, wherein movements of at least one group of pixels in the set of views between a given time instant and a preceding time instant is stored in the layered depth image generated for the given time instant.

7. A method or an apparatus according to claim 5, wherein the same reference view order selection from the set of views is used for generating other layered depth images over time as long as a number of frames between the given time instant and the first time instant is below a value or a number of groups of pixels obtained from segmenting the set of views that have changed between the given time instant and the time instant preceding the given time instant is below another value.

8. A method or an apparatus according to claim 6, wherein the reference view order selection from the set of views used for generating other layered depth images over time is reset at each keyframe time instant, and wherein at a keyframe time instant, generating the layered depth image is performed as for generating the layered depth image at the first time instant.

9. A method or an apparatus according to claim 4, wherein another layered depth image generated for a given time instant comprise only groups of pixels that are not comprised in another layered depth image generated for a preceding time instant and groups of pixels that have moved between the preceding time instant and the given time instant.

10. A computer program comprising software code instructions for performing the method according to any one of claims 1 to 8, when the computer program is executed by a processor.

11. A computer readable storage medium comprising a computer program according to claim 10.

12. A data stream representative of at least one layered depth image representative of a set of views representative of a Light-Field capture of a scene, said data stream comprising:
- a first layer comprising pixels data of groups of pixels comprised in a reference view from the set of views,
- and at least one other layer comprising pixels data of groups of pixels that are not comprised in the reference view, and wherein said at least one other layer comprises pixels data at a position only if a preceding layer of the layered depth image already comprises pixels data at the same position.

13. A data stream according to claim 12, wherein said data stream comprises depth data associated to pixels data and/or movement information associated to pixels data.
